# EUROPEAN PATENT APPLICATION

(11) **EP 4 071 455 A2**
(43) Date of publication of application: **12.10.2022**
(21) Application number: 22166962.5
(22) Date of filing: 06.04.2022
(51) Int. Cl.: G01M 3/16, E04D 13/00, G06K 19/077

(54) **ROOF COVERING AND METHOD FOR MONITORING AND RECYCLING A ROOFING**

(30) Priority: 06.04.2021 NL 2027922
(71) Applicant: Dakip B.V., 8191 HZ Wapenveld (NL)
(72) Inventor: VAN DELDEN, Roeland Hans Ferdinand, 8191 HZ Wapenveld (NL)
(74) Representative: V.O.

(57) **Abstract**

The disclosure relates to a roof covering including a roofing for covering a roof of a building, and method for recirculating the roofing by monitoring a condition of the roofing. To facilitate recycling, the roofing is provided with an identification tag for identifying the roofing, wherein the identification tag comprises information related or relatable to production data of the roofing. The roofing condition may be monitored with one or more sensor modules, which are configured for sensing roofing parameters of the roofing, and communicating the sensed roofing parameters to a remote monitoring station.

## Description

The invention relates to a roof covering for covering a roof of a building, and method for monitoring a condition of the roof covering for recycling the roof covering.

For weatherproofing a roof of a building, the structural deck of the roof is often provided with a substantially impervious roofing. The roofing may be used as the main roof covering, covering substantially the entire roof, and/or as a flashing, e.g., for a tiled roof, to surround roof features such as chimneys, vents and dormer windows. As a consequence of its exposure to the varying and sometimes harsh environmental conditions, the roofing is susceptible to deterioration over time, compromising the weatherproofing properties of the roof. The roof, particularly the roofing, is to be inspected and serviced regularly, or repaired or replaced when e.g. leakage is observed. However, repair of the roofing on the roof is typically only performed after damage has already been done. Also scheduled regular servicing of the roofing, to prevent damage costs, may be time consuming and costly, and may often be redundant.

It is an aim ameliorate the above mentioned drawbacks. It is furthermore an aim to efficiently recirculate the roofing material. In a first aspect is accordingly provided a method for monitoring a condition of a roofing, comprising providing a roofing with a sensor module, and providing the roofing on a roof of a building, wherein the sensor module senses one or more roofing parameters over time and communicates the sensed roofing parameter to a monitoring station wherein, e.g. at the monitoring station, a condition of the roofing is determined based on the sensed roofing parameter. The roof and the roofing can be monitored remotely to determine a condition of the roof and the roofing. The one or more roofing parameters may be indicative for a condition of the roofing, such that the roof can be serviced or repaired when required. The roofing may comprise/is a sheet, slab or membrane of a non-pervious construction material, e.g. a roofing membrane, which is preferably substantially flexible and/or substantially pliable, so as to adapt to a shape of a roof construction.

Optionally, the roofing is removed from the roof in case the determined condition of the roofing is below a predefined reference condition, and reprocessed into a novel roofing. It is particularly useful to monitor the roofing during its service life, for the purpose of eventually recycling the material of the roofing.

Optionally, a location of the roofing is sensed with the sensor module, and communicated with the monitoring station. Location data, e.g. indicative of a geographic location of the roofing, can for example be accounted for when determining a condition of the roofing. For example, the roofing may be located in a particular climate zone, e.g. a cold climate zone, which influences the deterioration of the roofing over time in a particular known way. Although buildings are stationary objects, that do not relocate over time, it can be particularly beneficial to be able to localise the roofing so as to reclaim and recycle the roofing after it has been removed from a roof, for instance after demolition of a building that has been provided with the roofing. The roofing can for example be provided with a location-tracker, such as a GPS-device. The sensor module could also include a motion detection sensor for detecting a motion of the roofing that is *e.g.* indicative of a removal of the roofing from a roof.

Optionally, the roofing is provided with an identification tag for allowing identification of the roofing. Hence, the roofing can be identified, for example at an end of a life-cycle of the roofing. This way, the roofing can be for example be related to an owner of the roofing. Also, the identification tag may be used to retrieve production data of the roofing, such as composition of the roofing material.

Optionally, the identification tag comprises information that is related or relatable to production data of the roofing. Hence, a particular roofing can be related to production data of that particular roofing, which can be useful for recycling processes or repurposing processes of the material of the roofing. The identification tag of the roofing can for instance be used to retrieve information about the manufacturing process of the roofing. This production information may further be used for asserting a current and/or future condition of the roofing. The identification data including the production information may be used in combination with the sensor data including the roofing parameter, to determine a condition of the roofing.

The identification tag may be a machine-readable tag. The identification tag for example comprises a machine-readable code, that relates to or is relatable to production information of the particular roofing. For example, the identification tag may include a bar-code, QR-code, colour-code, and/or an RFID chip. The identification tag may be provided on the roofing during or after the production of the roofing.

Optionally, the roofing communicates identification data with the monitoring station, which identification data is related or relatable to production information of the roofing. Information on the production of the roofing can be indicative for the properties of the roofing and can accordingly be instrumental for an accurate determination of the condition of the roofing.

Optionally, the production information includes manufacturing process information and/or a compositional information of the roofing. The manufacturing process information may include data relating to the manufacturing process of the particular roofing. For example, the manufacturing process information may include a date of manufacturing, a place of manufacturing, a batch number, a particular process steps of manufacturing, and/or the materials involved in manufacturing. The compositional information may relate to a composition of the particular roofing. For example, the compositional data may include, the compounds making up the roofing, the base materials used in manufacturing the roofing, a structure of the roofing, a layup of the roofing, and/or initial properties of the roofing such as yield strength, hardness, melting points. Such data can assist in asserting a condition of the roofing in combination with sensor data obtained from the sensor module. Moreover, the information on the manufacturing process and/or the composition of the roofing facilitate effective recirculation of the roofing when the roofing material is recovered at the end of a life cycle of the roofing. Given the long service life of a roofing, which is typically in the order of twenty to fifty years, recycling/manufacturing processes and compositions of newly produced roofings may vary over time. It is as such useful to be able to retrieve the manufacturing information and compositional information from a respective roofing, particularly at the end of its service life.

Optionally, the determining of the condition of the roofing is further based on the identification data.

Optionally, the determining of the condition of the roofing is further based on a record of the sensed roofing parameter of the roofing over time. Historic data of the roofing parameter could be indicative for determining a current condition and/or a future condition of the roofing. The recorded sensed roofing parameter over time may be extrapolated to provide a prognosis on the state of the roofing. The roofing may for example be replaced proactively.

Optionally, the determining of the condition of the roofing is further based on collective sensor data collected and recorded from multiple roofings, for example from multiple roofings on different buildings. The recoded sensor data of multiple roofings may be compared to improve the overall accuracy of determining a current and/or future condition of the roofing. Moreover, the recorded sensor data of a plurality of roofings may be used to optimise the composition and manufacturing process of the roofings. For example, the sensor data of multiple roofings having slightly different compositions, while being employed at approximately equal geographical locations, e.g. on neighbouring roofs, can provide useful insight for optimising the composition and manufacturing process of the roofings for that location.

Optionally, the determining of the condition of the roofing is further based on weather data of weather conditions at the location of the roofing. The weather data can include a record of the weather conditions at the location of the roofing. The weather data may also include weather forecasts, for determining a prognosis of the condition of the roofing, and for example to schedule a suitable date for servicing, repairing or replacing the roofing. The weather data for example includes precipitation data, temperature data, atmospheric pressure data, wind velocity data, humidity data, which may be obtained from a local weather station at or near the roof, or from external resources.

Optionally, a prognosis on the condition of the roofing is made based on a record of the sensed roofing parameter of the roofing over time. The prognosis on the condition of the roofing allows proactive actions, such as a precautionary reinforcement of the roofing when damages of the roofing are to be expected. The recorded sensed roofing parameter over time can for example be extrapolated to provide the prognosis on the condition of the roofing.

Optionally, the prognosis is made further based on collective sensor data collected and recorded from multiple roofings. Sensor data collected from a plurality of roofings can be a rich source of information for predicting future course of the condition of the roofing. Predictive modelling methods may for example be employed for making the prognosis.

Optionally, the removed roofing is replaced with a novel roofing, particularly wherein the novel roofing is a recycled roofing. A recycled roofing can be a roofing that is at least partly manufactured from reprocessed roofing materials recovered from older roofings.

According to a second aspect is provided a sensor system, comprising a sensor unit arranged for sensing a roofing parameter of a roofing on a roof; and a transceiver unit arranged for, e.g. short-range, wireless communication with the sensor unit. More particular, the second aspect may provide, a roof of a building provided with a roof covering having a roofing with a front surface facing outward from the roof and a back surface opposite the front surface facing the roof, and a sensor module of the sensor unit provided on the back surface of the roofing comprising one or more sensors for sensing a roofing parameter, wherein the roof is provided with a transceiver unit arranged for wireless, e.g. short-range, communication with the sensor unit. The sensor module being provided at the back surface of the roofing shields the components of sensor module from the direct influences of the environment, while being able to sense the roofing parameter of the roofing. By establishing a wireless connection between the sensor unit and the transceiver, the roof covering can be easily installed on site, without having to weatherproof a wired connection between *e.g.* the sensor module and the transceiver unit, *e.g.* through a hole in the roofing, that is susceptible to leakage. The sensor unit for example comprises a transmitter for wirelessly transmitting a sensor signal across the roofing, including sensor data such as the sensed roofing parameter, which sensor signal is received by the transceiver unit. The roofing parameter can for instance be a parameter of the roofing itself or its near environment, such a temperature, a moisture content, a pressure, an electric conductivity, etc. The transceiver unit may be arranged to communicate with multiple sensor of a single roof.

Optionally, the sensor system comprises a monitoring system, remote from the roof, wherein the transceiver unit is arranged for receiving a sensor data signal from the sensor unit and communicating the sensor data signal with the remote monitoring station, e.g. over a long-range communication channel. The transceiver unit is for examples arranged to transmit a wireless data signal, relating to the sensor data signal, using known wireless communication means to the remote monitoring station. The remote monitoring station, receiving the data signal from one or more transceiver units, could be arranged monitor multiple roofs, and could record the sensor data thereof, to determine a condition of the roof(s) and optionally a prospect of the roof conditions. The monitoring station could for example be configured to determine whether or not to repair and/or replace a roofing, based on the received data signal. For instance, the monitoring station may be arranged to determine to repair or replace a particular roofing in case the determined condition of the roofing is below a predefined reference condition.

Optionally, the sensor module of the sensor unit comprises a transmitter device arranged for emitting an electromagnetic signal, in particular an electromagnetic signal in the ultra-high frequency range, across the roofing wherein the transceiver unit is arranged for detecting the emitted electromagnetic signal and for determining an attenuation parameter of the emitted electromagnetic signal. A part of the emitted sensor signal may be attenuated by the roofing and other material between the transmitter device and the transceiver unit. The attenuation of the signal, in particular being in the ultra-high frequency range, may depend on the moisture content in the signal path between the transmitter device and the transceiver unit. The attenuation of the signal, e.g. expressed as the attenuation parameter, may thus be indicative of a moisture content between the transmitter device and the transceiver unit. For instance, the attenuation parameter may relate to a difference between the power of the emitted electromagnetic signal and the power of the received electromagnetic signal, which may be indicative of a moisture content in the signal path between the transmitter device end and transceiver unit. This way, it may *e.g.* be determined whether the roofing supports a column of water, and/or whether the roofing leaks. The degree of signal attenuation may be a measure for the moisture content between the transmitter device and the transceiver unit. The emitted electromagnetic signal can be a sensor signal including the sensor data of the sensed roofing parameter, but it may also be separate signal such as emitted a separate signal transmitted by a dedicated transmitter device. The electromagnetic signal is for example a ultra-high frequency (UHF) signal, such as a signal in the frequency band of 300 MHz - 3 GHz, which provides a good trade-off between signal range and attenuation characteristics.

According to a third aspect is provided a sensor unit for roofing, and in particular for a sensor system according to the second aspect, and for use in a method according to the first aspect. The sensor unit comprises a sensor module arranged to be provided on a first face of the roofing for sensing a roofing parameter; and a power supply module arranged to be provided on a second face of the roofing, opposite the first face, for supplying power to the sensor module, wherein the power supply module and the sensor module are arranged to wirelessly transfer power from the power supply module to the sensor module across the roofing. The power supply module may comprise a power generator module for generating power, such as a solar cell. More particular, the third aspect provides a roof covering for use in a method according to the first aspect. The roof covering comprises a roofing having a front surface for facing outwardly from the roof and a back surface opposite the front surface; a sensor module provided on the back surface of the roofing for sensing a roofing parameter; and a power supply module provided on the front surface of the roofing for supplying power for the sensor module, wherein the power supply module and the sensor module are arranged to wirelessly transfer power from the power supply module to the sensor module across the roofing. It is preferred to provide the sensor module on the back surface of the roofing to shield it from the environment. However, a downside of this position is that the sensor module is to be powered from either the interior of the building, for example via a power cable connection to the main electricity grid, which can be complex and unwanted, or from an exterior of the building wherein a power cable connection has to be established through the roofing. Accordingly, a wireless power connection between the power supply module and the sensor module obviates the need for a cable connection. The integration of the sensor module, the roofing, and the power supply module furthermore facilitates the installation and removal of the roof covering. The provision of the power supply module on the front side of the roofing enables easy access thereto. In order to minimise losses, the power supply module and the sensor module may be located opposite each other on either side of the roofing so as to minimise a distance there between. Power may for instance be transferred across the roofing from the power supply module to the sensor module by magnetic fields using inductive coupling between respective coils of the power supply module and the sensor module. Alternatively, or additionally, power may be transferred across the roofing from the power supply module to the sensor module by electric fields using capacitive coupling between respective electrodes of the supply module and the sensor module. It will be appreciated the roofing may comprise a sheet of electrically non-conductive material, such as bituminous material. The roofing may be for example comprise a sheet of construction material, for example bitumen, polymer modified bitumen, polyvinyl chloride, polychloroprene (also known as neoprene), ethylene propylene diene monomer (EPDM), chlorinated polyethylene, thermoplastic polyolefin, and chlorosulphonated polyethylene, or a material as described in WO-A-2016/108686.

Optionally, the power supply module comprises a photovoltaic cell for converting solar energy to electric energy. Solar power may be particularly accessible for powering the sensor module. The roofing may for example be provided with a plurality of sensor modules distributed over the back surface, wherein each sensor module is powered by a single respective power supply module. A roof may also be provided with collective solar panel for converting solar energy in to electric energy for powering the plurality of sensor modules, wherein the electric energy is distributed over a plurality of sensor modules. In this case, each sensor module may be associated with a respective power transmitter device for wirelessly transmitting power across the roofing.

Optionally, the photovoltaic cell is connected to a power transmitter of the power supply module for wirelessly transmitting power across the roofing.

Optionally, the sensor module comprises a power receiver for wirelessly receiving power from the power supply module.

Optionally, the power receiver is connected to a battery of the sensor module, for storing energy received from the power supply module. This way, energy can be stored for later use, e.g. at night when solar power is not available.

Optionally, the sensor module comprises one or more sensors selected from a temperature sensor, a load sensor, a location sensor, a light sensor, and a moisture sensor. The sensors may sense various roofing parameters, such as a temperature of the roofing and/or its environment, loads or stress on the roofing, damages of the roofing, *etc.*

Optionally, the sensor module comprises a transmitter device for wirelessly transmitting sensor data to a roof transceiver.

Optionally, the sensor module is adhered to the back surface of the roofing by means of an adhesive, such as a glue.

Optionally, the power supply module is adhered to the front surface of the roofing by means of an adhesive, such as a glue. Adhering provides an effective and non-invasive way to durably attach the sensor module and/or power supply module to the roofing.

Optionally, the power supply module and the sensor module are magnetically coupled to one another. The power supply module may for example comprises a first magnetic or magnetisable member, and the sensor module may comprise a second magnetic or magnetisable member, wherein the first magnetic or magnetisable member and the second magnetic or magnetisable member are arranged to pull the sensor module and the power supply module towards one another. This way, the power supply module and the sensor module can be easily aligned with one another to optimise the wireless power transmission therebetween.

Optionally, the roof covering comprises a plurality of sensor modules spread over the back surface of the membrane, and an equal number of power supply modules, each power supply module being associated with a respective sensor module.

According to a fourth aspect is provided a roof covering, in particular in accordance with the third aspect, comprising a roofing; and an identification tag provided on the roofing, for identification of the roofing. The identification tag can comprise information related or relatable to production data of the roofing. The identification tag for example comprises a machine-readable code, that relates to or is relatable to production information of the particular roofing. For example, the identification means may include a bar-code, QR-code or similar or an RFID chip.

Optionally, the production data includes manufacturing process data and/or composition data of the roofing.

Optionally, the roofing comprising a front surface for facing outwardly from the roof and a back surface opposite the front surface, wherein the identification tag is provided on a back surface of the roofing.

The roofing as described herein can comprise/is one or more sheets, membranes, or slabs of construction material, particular of a non-pervious construction material, for instance a sheet of flashing material. The sheets, membranes, or slabs of construction material can be substantially flexible and/or substantially pliable, so as to adapt to a shape of a roof construction. The roofing can for example be rolled-up sheet of construction material to facilitate handling and transportation thereof, wherein the rolled-up roofing is unrolled on site, *e.g.* at a roof of a building, so as to at least partly cover the roof. It will be appreciated that a roof may be provided with multiple roofing membranes. Optionally, the roofing comprises a sheet of bituminous material. The roofing may be a sheet of construction material, such as bitumen, polymer modified bitumen, polyvinyl chloride, polychloroprene (also known as neoprene), ethylene propylene diene monomer (EPDM), chlorinated polyethylene, thermoplastic polyolefin, and chlorosulphonated polyethylene, or a material as described in WO-A-2016/108686. Particularly, the roofing may comprise a perforated sheet of metal and on at least one side of the perforated sheet of metal a thermoplastic layer, wherein the thermoplastic layer has a modulus of elasticity as measured according to ISO 527 of 0.6-20 MPa; a Shore A hardness as measured according to ISO 7619-1 in the range of 25-65; and an elongation at break as measured according to ISO 527 of 250-400 %. Preferably, the thermoplastic layer comprises a polymer comprising butyral groups, preferably 40 % or more by total weight of the thermoplastic layer, such as 60 % or more. It is also possible that the construction material is a synthetic flashing material that comprises 75 wt.% of polymer material and 10 wt.% or less of metals. Preferably, the construction material is substantially free, *i.e.,* 1 wt.% or less, such as 0.5 wt.% or less, of heavy metals, such as lead.

According to a fifth aspect, there is provided a method for recirculating a roofing material, in particular a roofing as described herein, the method comprising leasing the roofing material from a lessor to a lessee, and wherein the roofing material is reclaimed by the lessor at the end of a service life of the roofing material for recycling of the roofing material. It will be appreciated that a service life of the roofing material can be the time the roofing material serves as a roofing for a building.

Optionally, the roofing material is reprocessed after its service life into a novel roofing material.

The lessor can for example include a manufacturer of the roofing material, which manufacturer can remain owner of the roofing material during the entire service life of the roofing material, such that the roofing material can be efficiently and effectively recycled at the end of the service life. A service contract may be concluded between the lessor and the lessee for servicing the roofing material during its service life. The roofing material may be monitored during its service life by the lessor, by means of one or more sensors provided on the roofing material, so that the roofing material can be serviced, repaired or replaced accordingly.

It will be appreciated that any one or more of the above aspects, features and options can be combined. It will be appreciated that any one of the options described in view of one of the aspects can be applied equally to any of the other aspects. It will also be clear that all aspects, features and options described in view of the methods apply equally to the sensor system, the sensor unit, the roof, the roofing, and the roof covering, and *vice versa.*

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawings:
Fig. 1 shows a schematic cross sectional view of a roof covering;
Fig. 2 shows a schematic top view of roof provided with a roof covering;
Fig. 3 shows a schematic perspective view of a building having a roof provided with a roof covering;
Fig. 4 shows a schematic representation of a roof monitoring system.

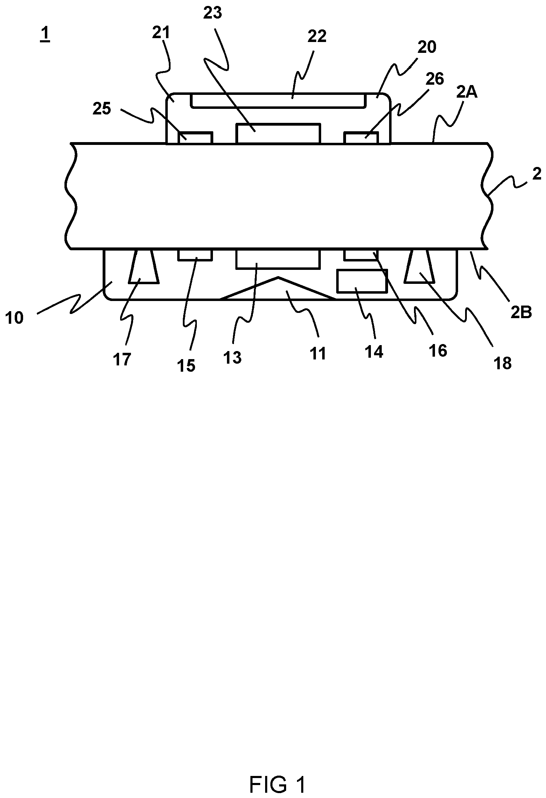

Fig. 1 a schematic cross sectional view of a roof covering 1, comprising a roofing 2, particularly a sheet of construction material, e.g. a roofing membrane. The roofing 2 is configured for application on a roof of a building, wherein it forms a protective layer for the roof. The roofing 2 accordingly typically forms an outermost layer of a roof of a building, and has a front surface 2A facing outwardly from the roof, and a back surface 2B facing inwardly towards the building. The roofing 2 can be deployed on site, *e.g.* on a roof of a building, from a rolled-up state, in which the roofing is rolled-up, to an extended state, in which the roofing is unrolled to be installed on the roof. The roofing 2 is preferably substantially pliable to adapt to a shape of the roof, for instance to be formed around construction features of the roof such edges, corners and protrusions, for example from chimneys and dormers *etc.*

Provided at the back surface 2B of the roofing is a sensor module 10, which is may be adhered to the back surface 2B of the roofing 2 by means of an adhesive. The sensor module 10 is arranged between the roofing 2 and a roof structure of the roof, such that the sensor module 10 is substantially shielded from the environment. The sensor module 10 can comprise one or more sensors 17, 18 arranged for measuring one or more properties of the roof, *e.g.* a roofing parameter such as a temperature of the roofing 2, a deformation of the roofing 2, moisture, vibrations, damages such as holes in the roofing 2, *etc.*

The sensor module 10 comprises a transmitter device 11 for wirelessly transmitting a sensor signal. The sensor signal can include data e.g. sensor data that relates or is relatable to one or more sensor parameters sensed by the one or more sensors of the sensor module. The sensor signal can be received by a roof transceiver unit which is for example provided on the same roof as the roof covering. The sensor signal may be an electromagnetic signal, particularly in the ultra-high frequency (UHF) in a range from approximately 300 MHz to approximately 3000 MHz. The transceiver unit and the sensor module may for example establish a Bluetooth connection. At the transceiver unit, that receives the sensor signal, an attenuation of the sensor signal may be determined. For example, a power of the sent sensor signal by the sensor module can be compared to a power of the received sensor signal by the transceiver unit. The degree of signal attenuation in the transmission of the sensor signal from the sensor module to the transceiver, may be indicative of moisture content in between the sensor module and the transceiver unit. This way, e.g., it can be determined whether there is a leak in the roofing or whether the roof holds a column of water. The transmitter device 11 may be arranged to transmit two separate signals, *i.e.* a first sensor signal including sensor data relating to the sensed roofing parameter, and a second signal for measuring moisture between the sensor module and the transceiver unit. For this the transmitter device may include a first transmitter for transmitting the first sensor signal that includes the sensor data, and a second transmitter for transmitting the second sensor UHF signal for measuring moisture.

Opposite the sensor module 2, on the opposite side of the roofing 2, a power supply module is provided, here a power generator module 20, for generating power for the sensor module 10. The power generator module 20 may be adhered to the front surface 2A of the roofing 2 by means of an adhesive. The power generator module 20 comprises a housing 21, wherein integrated with the housing 21 a solar panel 22 is provided for converting solar energy into electric energy. The solar panel 22 may comprise one or more photovoltaic cells. It will be appreciated that the solar panel 22 may be provided in a separate housing, separate from the power generator module 20, for example in a situation where the roofing 2 does not form the outermost layer of a roof such as when the outermost layer comprises vegetation in so called green roofs. In that situation, the solar panel 22 may be provided at a suitable location where it is exposed to the sun, wherein an electric connection may be established between the solar panel and other components of the power generator module 20.

The power generator module 20 further comprises a power transmitter 23, which power transmitter 23 is arranged for wirelessly transmitting power to the sensor module 10. The power transmitter 23 is closely positioned to the front surface 2A of the roofing 2 to minimise a distance between the power generator module 20 and the sensor module 10. The sensor module 10 on the other side of the roofing 2 comprises a power receiver 13, which power receiver 13 is arranged for receiving the wirelessly transmitted power from the power transmitter 23. The power receiver 13 is positioned close to the back surface 2B of the roofing 2 to minimise a distance between the power receiver 13 and the power generator module 20. Power is transferred across the roofing 2 from the power transmitter 23 to the power receiver 13 by magnetic fields using inductive coupling between a first coil of the power transmitter 23 and a second coil of the power receiver. Alternatively, power is transferred across the roofing 2 from the power transmitter 23 to the power receiver 13 by electric fields using capacitive coupling between first electrodes of the power transmitter 23 and second electrodes of the power receiver 13.

To optimise power transmission from the power generator module 20 to the sensor module 10, the power transmitter 23 and the power receiver 13 are aligned with one another by one or more pairs of cooperating magnets that cooperate. For example, the cross sectional view of Fig. 1 shows two magnets 15, 16 of the sensor module 10 and two associated magnets 25, 26 of the power generator module 20.

The sensor module further comprise a battery 14 for storing energy transmitted by the power generator module, and powering components of the sensor module 2, such as the one or more sensors 17, 18.

The roofing described herein can be a sheet of construction material, such as a sheet of flashing material. For example, the construction material may be a sheet of metal flashing material, such as lead, aluminium, copper, stainless steel, zinc alloy. Optionally, the construction material comprises a bituminous material. The construction material may be a sheet of flashing material available as Ubiflex^{™} and/or Perform^{™} and/or Leadax^{™}. Particularly, the construction material may comprise a perforated sheet of metal and on at least one side of the perforated sheet of metal a thermoplastic layer, wherein the thermoplastic layer has a modulus of elasticity as measured according to ISO 527 of 0.6-20 MPa; a Shore A hardness as measured according to ISO 7619-1 in the range of 25-65; and an elongation at break as measured according to ISO 527 of 250-400 %. Preferably, the thermoplastic layer comprises a polymer comprising butyral groups, preferably 40 % or more by total weight of the thermoplastic layer, such as 60 % or more. It is also possible that the construction material is a synthetic flashing material that comprises 75 wt.% of polymer material and 10 wt.% or less of metals. Preferably, the construction material is substantially free, *i.e.* 1wt.% or less, such as 0.5 wt.% or less, of heavy metals, such as lead.

The roofing 2 is preferably provided with an identification tag for identifying the roofing 2. The identification tag may for example comprise an identification code that is durably attached to the roofing, such as a bar-code or RFID-chip. The identification code can be transmitted by the sensor module 10 along with the sensor data. For example, the identification tag may be readable by the sensor module 10. The identification tag comprises information that is related or relatable to production data of the roofing 2, e.g. compositional data such as material composition of the roofing, base materials used in manufacturing the roofing, a structure of the roofing, a layup of the roofing, and properties of the roofing such as yield strength, hardness, melting points; and manufacturing data such as a date of manufacturing, a place of manufacturing, a batch number, a particular process steps of manufacturing, and/or the materials involved in manufacturing. the compounds making up the roofing.

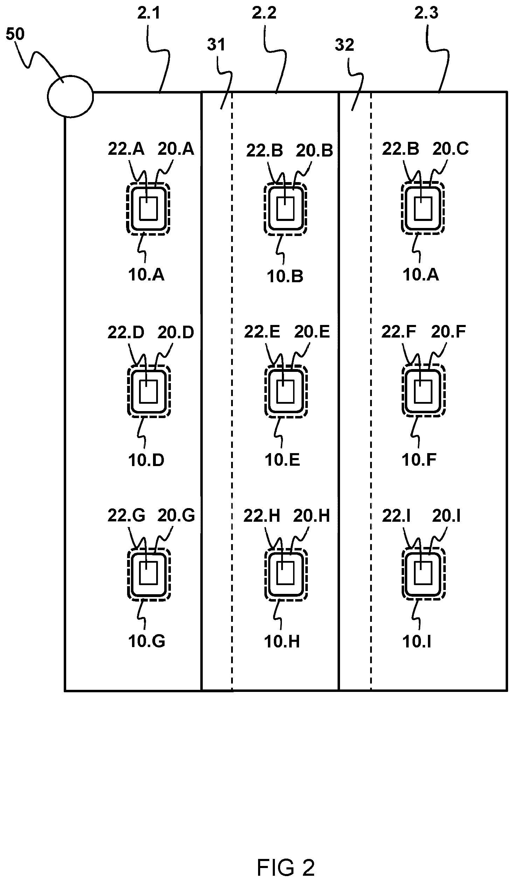

Fig. 2 shows a schematic top view of a roof covering comprising multiple roofings 2.i, here three roofings 2.1, 2.2, 2.3, which are attached to each other in an overlapping manner. The roofings 2.1, 2.2, 2.3 are particularly adhered to each other by means of an adhesive that is provided at the overlapping sections 31, 32 between adjacent roofings. The adhesive provides a water tight seal between the roofings 2.1, 2.2, 2.3 so as to provide a weather proof roof covering for a roof. Each of the roofings 2.1, 2.2, 2.3 is provided with one or more sensor modules 10.i for sensing one or more roofing parameter of the roofing, such as temperature, moisture, stress, light/air permeability, age, *etc.* Here each roofing 2.1, 2.2, 2.3 is provided with three sensor modules 10.A-10.I. Further, each of the roofings 2.i is provided with one or more power generator modules 20.i, wherein each power generator module 20.i is associated with a sensor module 10.i. Here, each roofing 2.1, 2.2, 2.3 is provided with three power generator modules 20.A-20.I, each power generator module 20.i being associated with a respective sensor module 10.i. The sensor modules 10.i of each roofing 20.i are evenly distributed over the roofing 2.i, to measure a state of the roof in various locations of the roofing 2.i. This way, the sensor modules also evenly distributed over the roof covering 1 of multiple roofings 2.1, 2.2, 2.3. Each of the power generator modules 20.A-20.I comprises a solar panel 22.A-22.I. It will be appreciated that in an alternative configuration, several power generator modules 20.A-20.I may have a common solar panel, e.g. a single roof may be provided with a collective solar panel for converting solar energy to electric energy, which electric energy is distributed over the power generator modules 20.A-20.I where the electric energy is wirelessly transmitted across the roofing 10.i for powering the sensor modules 10.A-10.I.

Sensor data transmitted by the sensor modules 10.A-10.I can be received by a transceiver unit 50, which is here provided at a corner of the roof covering 1. The transceiver unit 50 can be arranged to receive and collect all sensor signals from the sensor modules 10.A-10.I, and communicate the sensor data with a remote monitoring station. The transceiver may for example comprise a memory for storing the sensor data received from the sensor modules 10.A-10.I, wherein the sensor data are batch-wise sent to the monitoring station at regular predetermined intervals.

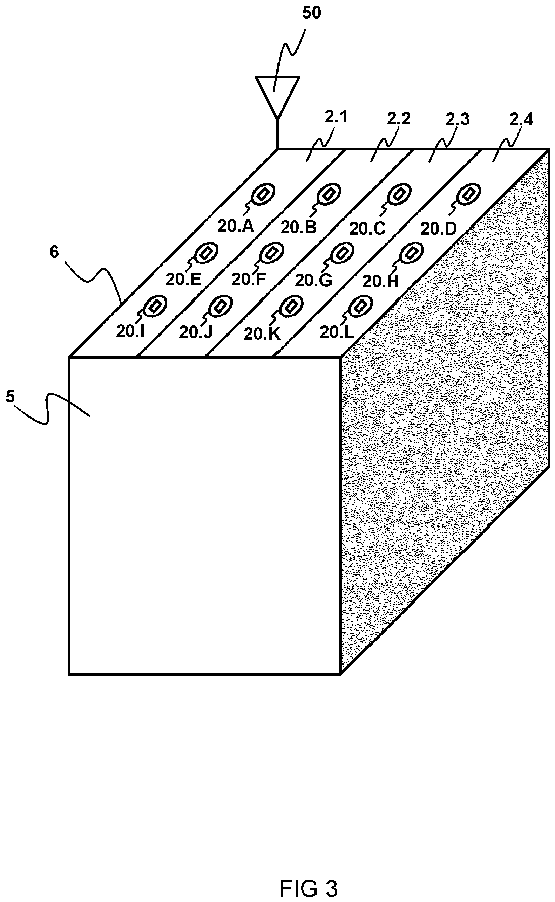

Fig. 3 shows a perspective view of a building 5, wherein a roof 6 of the building 5 is provided with a roof covering 1 comprising a multitude of roofings 2.i. In Fig. 3, the roof 6 is covered by four roofings 2.1, 2.2, 2.3, 2.4, that are overlappingly deployed on the roof similar as shown in Fig. 2. Also similar to Fig. 2, each roofing 2.1, 2.2, 2.3, 2.4 is provided with three sensor modules 10.A-10.L, and three associated power generator modules 20.A-20.L. The sensor modules 10.A-10.L communicate sensor data with the transceiver unit 50, and the transceiver unit 50 in turn communicates the sensor data with a remote monitoring station. It will be appreciated that a building may be provided with multiple transceiver units 50, or that multiple buildings near each other have a common transceiver unit 50.

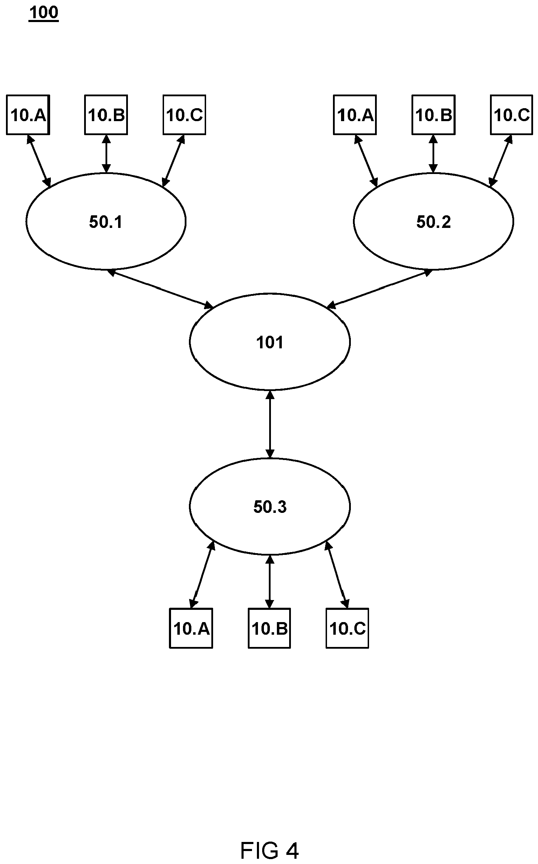

Fig. 4 shows a schematic representation of a monitoring system 100 for monitoring a condition of a roof 6. The monitoring system 100 comprises a monitoring station 101, which monitoring station 101 is in communication with multiple transceiver units 50 that are deployed at or near a respective roof 6 to be monitored. Fig. 4 shows a situation with three transceiver units 50.1, 50.2, 50.3 but it will be appreciated that the monitoring system 100 includes more than three or less than three transceiver units 50. Each of the transceiver units 50.1, 50.2, 50.3 communicates with one or more sensor modules 10, which sensor modules 10 are arranged to measure one or more roofing parameters of roofings 2 that cover the roof 6. The sensor modules 10 communicate sensor data including the sensed roofing parameters with their associated transceiver unit 50, wherein the transceiver unit 50 in turn communicates the sensor data with the monitoring station 101. The monitoring station 101 may be remote from any of the transceiver stations 50. In the example of Fig. 4, each roof is provided with a roof covering that includes three sensor modules 10.A, 10.B, 10.C.

At the monitoring station 101, the sensor data from the sensor modules on the various roofs is collected and stored, wherein a condition of a roof can be determined on the basis of the sensor data. For example, the monitoring station 101 may receive sensor data from a first transceiver station 50.1, indicating that a leakage sensor of sensor module 10.A has sensed a leakage in a roofing of the roof covering. The monitoring station 101 may generate a notification signal, e.g. automatically, to notify an owner of the relevant building of the leakage and/or to a service provider that is able to repair or replace the roof covering on site.

As the material of a roofing 2 deteriorates over time, under the influence of the environment, the monitoring station 101 may determine a condition value of the roofing 2 that reflects a current state of a roofing 2. For example, collected temperature data of a particular roofing 2 over time, sensed by a temperature sensor, can provide useful insights on the current condition and future condition of that particular roofing 2. Also local weather conditions at the location of said roofing 2 give an indication on the conditions the roofing is subjected to, and can be instrumental in determining a current condition and future condition of the roofing 2. Moreover, with collective sensor data acquired from multiple sensor modules 10, from multiple roofs 6, and e.g. combined with empirical data on deterioration of roofings 2, a current and/or a future condition may be accurately estimated. With such determination of the current state and future state of a roofing 2, e.g. maintenance of the roof may be proactively scheduled.

The determining of the condition of a particular roofing 2 may be based on the production data of the roofing 2, e.g. compositional data such as material composition of the roofing; and manufacturing data such as a date of manufacturing, a place of manufacturing. For example, the sensor module 10 could send an identification code, along with the sensor data, wherein the production data of that particular roofing is retrievable form a database at the monitoring station 101, from the identification code. The production data of and the sensor data associated with the particular roofing 2, can be combined to determine a current and/or future condition of the roofing.

The monitoring system 100 particularly facilitates in a method for recycling a roofing 2. For example, a roofing 2 is provided with one or more sensor modules 10, and is provided on a roof of a building, wherein the condition of the roofing 2 is monitored during its service life on the roof. The roofing 2 can be removed from the roof, and e.g. replaced with a novel roofing 2, in case the condition value of the roofing is below a certain reference condition value. The removed roofing 2 can be reclaimed, and reprocessed into a novel roofing 2.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

The present application also discloses the subject matter as set out in the following numbered clauses.

Clause 1. Method for monitoring a condition of a roofing, comprising providing a roofing with a sensor module, and providing the roofing on a roof of a building, wherein the sensor module senses a roofing parameter over time and communicates the sensed roofing parameter to a monitoring station and wherein a condition of the roofing is determined based on the sensed roofing parameter.

Clause 2. Method according to clause 1, wherein the roofing is removed from the roof in case the determined condition of the roofing is below a predefined reference condition, and reprocessed into a novel roofing.

Clause 3. Method according to clause 1 or 2, wherein a location of the roofing is sensed with the sensor module, and communicated with the monitoring station.

Clause 4. Method a according to any preceding clause, wherein the roofing communicates identification data with the monitoring station, which identification data is related or relatable to production information of the roofing.

Clause 5. Method according to clause 4, wherein the production information includes manufacturing process information and/or a compositional information of the roofing.

Clause 6. Method according to any preceding clause, wherein the determining of the condition of the roofing is further based on the identification data.

Clause 7. Method according to any preceding clause, wherein the determining of the condition of the roofing is further based on a record of the sensed roofing parameter of the roofing over time.

Clause 8. Method according to any preceding clause, wherein the determining of the condition of the roofing is further based on collective sensor data collected and recorded from multiple roofings.

Clause 9. Method according to any preceding clause, wherein the determining of the condition of the roofing is further based on weather data of weather conditions at the location of the roofing.

Clause 10. Method according to any preceding clause, wherein a prognosis on the condition of the roofing is made based on a record of the sensed roofing parameter of the roofing over time.

Clause 11. Method according to clause 10, wherein the prognosis is made further based on collective sensor data collected and recorded from multiple roofings.

Clause 12. Method according to any of clauses 2-11, wherein the removed roofing is replaced with a novel roofing, particularly a recycled roofing.

Clause 13. Sensor system, comprising a sensor unit arranged for sensing a roofing parameter of a roofing on a roof; and a transceiver unit arranged for wirelessly communicating with the sensor module.

Clause 14. Sensor system according to clause 13, comprising a monitoring station, remote from the roof, wherein the transceiver unit is arranged for communicating the sensor data to the remote monitoring station.

Clause 15. Sensor system according to clause 13 or 14, wherein the sensor unit comprises a sensor module that is arranged for being provided at a side of the roofing opposite the transceiver unit, wherein the sensor module comprises a transmitter device arranged for transmitting an electromagnetic signal, in particular an electromagnetic signal in the ultrahigh frequency range, across the roofing wherein the transceiver unit is arranged for detecting the transmitted electromagnetic signal and for determining an attenuation parameter of the transmitted electromagnetic signal.

Clause 16. Sensor unit in particular for use in a method according to any of clause 1-12 and/or for a sensor system according to any of clause 13-15, comprising a sensor module arranged to be provided on a first face of the roofing for sensing a roofing parameter; and a power supply module arranged to be provided on a second face of the roofing, opposite the first face, for supplying power to the sensor module, wherein the power supply module and the sensor module are arranged to wirelessly transfer power from the power supply module to the sensor module across the roofing.

Clause 17. Sensor unit according to clause 16, wherein the power supply module comprises a photovoltaic cell for converting solar energy to electric energy.

Clause 18. Sensor unit according to clause 17, wherein the photovoltaic cell is connected to a power transmitter for wirelessly transmitting power across the roofing.

Clause 19. Sensor unit according to any of clauses 16-18, wherein the sensor module comprises a power receiver for wirelessly receiving power from the power supply module.

Clause 20. Sensor unit according to clause 19, wherein the power receiver is connected to a battery, for storing energy received from the power supply module.

Clause 21. Sensor unit according to any of clauses 16-20, wherein the sensor module comprises one or more sensors selected from a temperature sensor, a load sensor, a location sensor, a light sensor, and a moisture sensor.

Clause 22. Sensor unit according to any of clauses 16-21, wherein the sensor module comprises a transmitter device for wirelessly transmitting sensor data to a roof transceiver unit.

Clause 23. Sensor unit according to any of clauses 16-22, wherein the sensor module is adhered to the back surface of the roofing by means of an adhesive.

Clause 24. Sensor unit according to any of clauses 16-23, wherein the power supply module is adhered to the front surface of the roofing by means of an adhesive.

Clause 25. Sensor unit according to any of clauses 16-24, wherein the power supply module and the sensor module are magnetically coupled to one another.

Clause 26. Sensor unit according to any of clauses 16-25, comprising a plurality of sensor modules spread over the back surface of the membrane, and an equal number of power supply modules, each power supply module being associated with a respective sensor module.

Clause 27. Roofing provided with a sensor unit according to any of clauses 16 26.

Clause 28. Roof covering, comprising a roofing; and an identification tag provided on the roofing, for identifying the roofing, wherein the identification tag comprises information related or relatable to production data of the roofing.

Clause 29. Roof covering according to clause 28, wherein the production data includes manufacturing process data and/or composition data of the roofing.

Clause 30. Roof covering according to clause 28 or 29, the roofing comprising a front surface for facing outwardly from the roof and a back surface opposite the front surface, wherein the identification tag is provided on a back surface of the roofing.

Clause 31. Roof of a building comprising a sensor system according to any of clauses 13-15.

Clause 32. Method for recirculating a roofing material, in particular in accordance with any preceding clause, the method comprising leasing the roofing material from a lessor to a lessee, and wherein the roofing material is reclaimed by the lessor at the end of a service life of the roofing material for recycling of the roofing material.

## Claims

1. Roof covering, comprising a roofing and an identification tag provided on the roofing for identifying the roofing, wherein the identification tag comprises information related or relatable to production data of the roofing.

2. Roof covering according to claim 1, wherein the production data includes manufacturing process data and/or composition data of the roofing.

3. Roof covering according to claim 1 or 2, the roofing comprising a front surface for facing outwardly from the roof and a back surface opposite the front surface, wherein the identification tag is provided on a back surface of the roofing.

4. Roof covering according to any preceding claim, comprising a sensor module arranged for sensing a roofing parameter of the roofing on a roof; and a transceiver unit arranged for wirelessly communicating with the sensor module, and transmitting sensor data including the roofing parameter to a remote monitoring station, wherein the monitoring station is configured to determine a condition of the roofing based on the sensor data.

5. Roof covering according to claim 4, wherein the sensor module is arranged for being provided at a side of the roofing opposite the transceiver unit, wherein the sensor module comprises a transmitter device arranged for transmitting an electromagnetic signal, in particular an electromagnetic signal in the ultra-high frequency range, across the roofing wherein the transceiver unit is arranged for detecting the transmitted electromagnetic signal and for determining an attenuation parameter of the transmitted electromagnetic signal.

6. Roof covering according to claim 4 or 5, wherein the sensor module is arranged to be provided on a first face of the roofing for sensing a roofing parameter; and a power supply module arranged to be provided on a second face of the roofing, opposite the first face, for supplying power to the sensor module, wherein the power supply module and the sensor module are arranged to wirelessly transfer power from the power supply module to the sensor module across the roofing.

7. Roof covering according to claim 6, wherein the power supply module comprises a photovoltaic cell for converting solar energy to electric energy.

8. Building comprising a roof covering according to any preceding claim.

9. Method for recirculating a roofing, comprising
- providing the roofing with an identification tag comprising information that is related or relatable to production data of the roofing,
- identifying the roofing at the end of its life-cycle from the identification tag and retrieving the related or relatable production data of the roofing, and
- reprocessing the roofing into a novel roofing based on the retrieved production data.

10. Method according to claim 9, wherein the production data includes manufacturing process data and/or a compositional data of the roofing.

11. Method of claim 9 or 10, comprising monitoring a condition of the roofing by providing the roofing with a sensor module, wherein the sensor module senses a roofing parameter over time and communicates the sensed roofing parameter to a monitoring station, wherein the condition of the roofing is determined based on the sensed roofing parameter, and wherein the roofing is removed from the roof in case the determined condition of the roofing is below a predefined reference condition, and reprocessed into a novel roofing.

12. Method according to claim 11, wherein the determining of the condition of the roofing is further based on collective sensor data collected and recorded from multiple roofings.

13. Method according to claim 11 or 12, wherein the determining of the condition of the roofing is further based on weather data of weather conditions at the location of the roofing.

14. Method according to any of claims 11-13, wherein a prognosis on the condition of the roofing is made based on a record of the sensed roofing parameter of the roofing over time.

15. Method according to any of claims 11-14, wherein the removed roofing is replaced with a novel roofing, particularly a recycled roofing.
